(19)

Europäisches Patentamt
European Patent Office
Office européen des brevets

(11) **EP 2 829 857 A1**

(12) **EUROPEAN PATENT APPLICATION**

(43) Date of publication:
**28.01.2015  Bulletin 2015/05**

(51) Int Cl.:
**G01L 1/18** (2006.01)    **G01B 7/16** (2006.01)
**H01L 31/0384** (2006.01)

(21) Application number: **13306072.3**

(22) Date of filing: **24.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Ecole Polytechnique
91120 Palaiseau (FR)**

(72) Inventors:
• **Gacoin, Thierry
  91440 Bures Sur Yvette (FR)**

• **Rowe, Alistair
  91400 Orsay (FR)**
• **Das Gupta, Tapajyoti
  91120 Palaiseau (FR)**

(74) Representative: **Noel, Chantal Odile et al
Cabinet Orès
36, rue de St Pétersbourg
75008 Paris (FR)**

(54) **Piezoresistive material exhibiting an optimal gauge factor**

(57)    The present invention relates to a multilayer composite material comprising:
-a base layer
-a metallic layer consisting of an insulating matrix phase and of a metallic particles phase, said metallic particles being distributed in the insulating matrix, wherein a volume fraction $\phi$ being the ratio between the volume of metallic particles and the volume of the metallic layer corresponds to a critical volume fraction $\phi^* + \delta\phi$, with $0 < \delta\phi \leq 5\%$, the critical volume fraction $\phi^*$ being the volume fraction for which an increase of conductivity of the metallic layer as a function of the volume fraction $\phi$ has a maximum value.

EP 2 829 857 A1

**Description**

The present invention relates to a multilayered composite material and also to a process for manufacturing said multilayered composite material. The present invention also relates to the use of said multilayered composite material as strain gauge exhibiting high sensitivity.

Piezoresistance may be defined as a change in the electrical resistance (R) of an electrical device induced by an applied mechanical stress. This phenomenon is widely used for strain gauge devices allowing the measure of mechanical deformations of solids.

Example of applications of strain gauges are: i) real-time measurement of small strains in structural components such as parts of buildings and fuselage components on aircraft, ii) point-of-care medical systems such as blood pressure and heart rate monitors, and iii) surface quality control on production lines using fully automated atomic force microscopes.

The magnitude of the piezoresistance is often quantitatively evaluated by the so-called Gauge factor, GF, defined as the relative change in resistance caused by the stress applied, per unit strain.

In addition to a simple change of sample dimensions, the applied stress may modify the electronic structure and thus the electrical resistance of solids as explained later on. This effect has been widely studied in bulk metals and in silicon where $GF \sim 2$ and $GF \sim 100$ respectively.

Much larger gauge factors are of interest, not only from a scientific viewpoint since new phenomena may be involved, but also for the increased sensitivity of stress detection.

Apart from metals and silicon based materials and nanostructures, other possible piezoresistive materials are composite materials with networks of conducting particles. Conducting composite materials consist of a total volume, $V_c$, of conducting particles distributed throughout an insulating matrix of volume $V_m$. The electrical resistance as a function of the volume fraction $\phi = V_c/V_m+V_c$, has been widely studied since it reveals a metal-insulator transition at a so-called critical volume fraction, $\phi^*$ (Kirkpatrick, S. Rev. Mod. Phys. 1973, 45, 574). This transition from an insulating behavior to metallic behavior, during which the resistance, that may vary by several orders of magnitude with changes in $\phi$ as small as 1 % or less, is associated with percolative transport. $\phi^*$ is also called percolation threshold. In this case R varies as $R \infty (\phi - \phi^*)^{-t}$ for $\phi$ slightly to the metallic side of the transition i.e. $\phi \geq \phi^*$ (where $t$ is known as the critical exponent).

However, for the most part, the literature treats cases either well below ($\phi << \phi^*$) (Zhou et Al, Carbon 2008, 46, 679) or well above ($\phi >> \phi^*$) said percolation threshold (Stankovich et Al. Nature 2006, 442, 282) where $GF$ is typically around 100 at best. Values ranging from $GF = 843$ in silicon/metal hybrids have been observed (Rowe, A.C.H.; Donoso-Barrera, A.; Renner, Ch.; Arscott,S. Phys. Rev. Lett. 2008, 100, 145501.) and values more than 3000 in silicon nanowires have been reported (He, R.; Yang, P. Nat. Nanotechnol. 2006, 1, 42.) although in the latter case the existence and details of the phenomenon are disputed.

The effect of stress is simple to understand since it modifies the connectivity between clusters. For $\phi < \phi^*$, the clusters of metallic particles are always disconnected regardless of the applied stress and the resistance remains high and changes very little with stress. For $\phi > \phi^*$, clusters of metallic particles are always connected regardless of the applied stress and the resistance remains low and changes very little. Close to $\phi^*$ the connectivity between clusters of metallic particles is greatly influenced by the applied stress, and the resistance may change significantly, yielding high gauge factors (GF).

Nevertheless, although the GF is expected to reach very high values very close to the percolation threshold, it has not been studied experimentally due to the difficulty in carrying out a process of fabrication of a composite material with sufficiently fine control of the metal volume fraction $\phi$.

Moreover, near the critical volume fraction $\phi^*$, the gauge factor varies like $GF \infty (\phi - \phi^*)^{-1}$, i.e. it diverges as $\phi - \phi^*$.

Indeed, it is expected that fluctuations in the resistance close to $\phi^*$ will also diverge, leading to intrinsic fluctuations in GF when a nominally identical measurement of it is repeated multiple times since the resistance can not accurately measured at $\phi^*$.

Therefore, in terms of applications, it is preferable to provide a piezoresistive material which presents not a maximum Gauge Factor (where the fluctuations in terms of resistance measurements are important) but a piezoresistive material which presents a Gauge Factor for which a highest intrinsic signal to noise ratio is obtained. Said intrinsic signal to noise ratio is given by a figure of merit of the piezoresistive material.

FR1054532 relates a process for the manufacture of metal/silica nano-composite thin films. This process is based on the photo-catalytic reduction of metallic ions inside a porous insulating matrix by irradiating the nano-composite thin film with a given radiation. In the process disclosed in this document, the irradiation is of a sufficient time to reach a percolation threshold, beyond which metallic nanoparticles (obtained by photocatalyzed reduction of the metal ions) form an electrically conducting structure. In this document, since a high conductivity is expected, the material is irradiated so as to reach a value $\phi >> \phi^*$, and therefore no fine tuning around $\phi^*$ has been performed. Moreover, this document does not deal with the issue regarding the fluctuations of the values of GF when $\phi \sim \phi^*$.

Consideration of the prior art leads to the conclusion that there is a need to provide piezoresistive material exhibiting high sensitivity.

It is an object of the present invention to provide a piezoresistive material exhibiting an optimal Gauge Factor in terms of applications, i.e exhibiting a maximum intrinsic signal to noise ratio, and therefore, exhibiting a high sensitivity.

After extensive research, Applicants have developed new piezoresistive materials having a high sensitivity, much higher than actual piezoresistive materials.

A subject of the present application is therefore a multilayer composite material comprising:

- a base layer
- a metallic layer consisting of an insulating matrix phase and of a metallic particles phase, said metallic particles being preferably homogeneously distributed in the insulating matrix, wherein a volume fraction $\phi$ being the ratio between the volume of metallic particles and the volume of the metallic layer corresponds to a critical volume fraction $\phi^* + \delta\phi$, with $0 < \delta\phi \leq 5\%$, the critical volume fraction $\phi^*$ being the volume fraction for which an increase of conductivity of the metallic layer as a function of the volume fraction $\phi$ has a maximum value.

When the amount of metal in the metallic layer increases, after an initial limited decrease of the electrical resistance of the metallic layer, the electrical resistance suddenly decreases. Then, the electrical resistance decreases more and more slowly. In other terms, in a first phase there is an acceleration of the decrease of electric resistance and then in the second phase there is a slowdown of the decrease of electric resistance. The acceleration of the decrease of electric resistance is null between said both phases.

According to the invention, this point between both phases is named "critical volume fraction" abbreviated as $\phi^*$.

In terms of mathematics derivative, the critical volume fraction $\phi^*$ corresponds to the value where the first degree derivative of the curve $R=f(\phi)$ is maximum or where the second degree derivative of the curve $R=f(\phi)$ is null.

According to the invention, for a volume fraction really below the critical volume fraction $\phi^*$, the metallic particles are dispersed preferably homogeneously in the insulating matrix. Then, for volume fraction $\phi$ near the critical volume fraction $\phi^*$, some of the metallic particles are interconnected forming thus an homogenous network of metallic particles in the insulating matrix phase.

According to the present invention, the base layer may consist of any suitable solid material. For example, it may be plastic, silicon, glass, or any conducting substrate covered by an insulating layer. The base layer is preferably a thin glass substrate.

According to one embodiment, insulating matrix phase of the metallic layer may be a polymer or a sol-gel silica.

According to an embodiment, the sol-gel silica contains photocatalytic material in order to control the rate of metallic particles in the metallic layer.

According a preferred embodiment, the insulating matrix phase is mesoporous silica containing $TiO_2$ nanoparticles. The porosity allows for the diffusion of metal salts to the vicinity of $TiO_2$ particles that are known to exhibit efficient photoreductive properties.

According to an embodiment, metallic particles are selected in the group consisting of silver, gold, palladium, platinum, cobalt and nickel particles.

According to a preferred embodiment, metallic particles are silver, gold, palladium, platinum, which are less sensible to the oxidation than cobalt or nickel.

According to an embodiment, the metallic particles have a mean diameter comprised between 1 and 500 nm, preferable between 2 and 100nm.

According to an embodiment, the composite material may comprise a further layer on the metallic layer. Said further layer may be of a similar composition as the insulating matrix of the metallic layer except the absence of the photoreductive species. Preferably, it may be mesoporous silica.

The value of the critical volume fraction $\phi^*$ depends on the insulating matrix phase nature and also on the nature of the metallic particles.

According to an embodiment, the value of $\phi^*$ is determined by a direct method comprising the following steps:

- Plotting a calibration curve $R=f(\phi)$; and
- Determining the inflection point of the curve, said inflecting point corresponding to $\phi^*$.

The inflection point may be determined by calculating $dR/d(\phi)$ since it corresponds to a maximum at this point.

According to another embodiment, in order to have a more accurate value of $\phi^*$, said value of $\phi^*$ may be determined by a method comprising the following steps:

- Plotting a calibration curve $GF=f(\phi)$; and
- Determining the maximum point of the curve or the point where $d(GF)/d(\phi)$ is null, said point corresponding to $\phi^*$.

As previously mentioned, the value of a Gauge Factor of a piezoresistive material is directly linked to the variation of resistance (R) when a stress is applied on said piezoresistive material.

Thus, to carry out resistance measurements either in the method where a curve R=f($\phi$) has to be plotted or in the method where GF=f($\phi$) has to be plotted, the metallic layer of the composite material needs ohmic contacts.

Ohmic contact may be formed by different methods such as metal evaporation for example.

In order to plot the curve GF=f($\phi$), the Gauge Factor GF may be determined as follows.

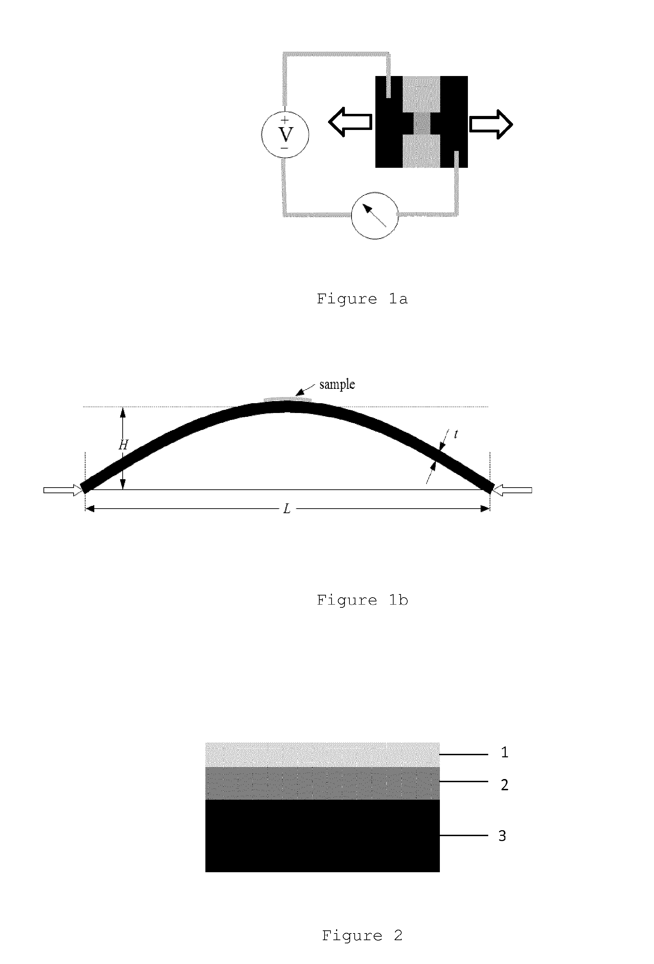

The piezoresistive material with ohmic contact shown in Figure 1a may be fixed (with glue for example) in the middle of a rectangular steel plate 4 (see figure 1b) having a length n, a width w and a thickness t.

The length n of the steel plate is comprised between 40 and 60cm, preferably between 48 and 50cm, the width w of the steel plate is comprised between 3 and 6cm, preferably between 4 and 5cm, and the thickness t of the steel plate is comprised between 0.2 and 0.8mm, preferably between 0.5 and 0.6mm in order to be at least 10 times thicker than the piezoresistive material.

When subjected to compressive forces at two ends as shown in Figure 1b, the plate is deformed to a sinusoidal shape of half-wavelength *L* and amplitude *H*. If a composite material of a thickness << *t* is glued to the top (bottom) face of the plate, it experiences a uniaxial tensile stress given by formula

$$\frac{\Delta l}{l} = \frac{\pi^2}{2} \cdot \frac{dH}{L^2} = \varepsilon$$

where *1* is the initial, unstressed, length of the composite material.

Thus, the applied stress $\varepsilon$ is determined by independently measuring *L* and *H* and through the use of the above equation.

According to an embodiment, $\varepsilon=10^{-4}$.

The applied stress is modulated by applying different forces on the two ends of the steel plate (leading to a modulation the amplitude of the sinusoid between H1 and H2 not represented in figure 1b).

The resistance is measured at each stress level (Height denoted by H1 and H2) for determining the Gauge Factor at a given volume fraction $\phi$.

The ratio of the difference between these two resistances to the value of the resistance measured for the lower stress and then multiplied by the applied difference stress gives the value of the Gauge Factor.

The Gauge Factor for a given volume fraction $\phi$ and therefore for a specific composite material is thus given by the general formula:

$$GF = \frac{R(H2) - R(H1)}{Rav} \times \frac{1}{\Delta\varepsilon}$$

where

R(H2) represents the resistance when the steel plate has an amplitude H2

R(H1) represents the resistance when the steel plate has an amplitude H1

$R_{av}$ is the average of the two resistances R(H1) and R(H2)

$\Delta\varepsilon$ is the strain induced by the applied stress.

The resistance measurement may be carried out using a voltage source and an earthed picoammeter so that the DC resistance may be measured.

The current is preferably kept below 1$\mu$A to avoid unwanted fluctuations in the resistance measurements.

The metallic particles volume and the insulating matrix volume may be determined by different methods such as chemical analysis and film thickness analysis.

According to one embodiment, metallic particles volume may be determined by a method comprising the following steps:

- Dissolution of a given surface of the metallic layer in a given volume of solvent;
- Chemical analysis of the metal ion concentration; and
- Calculation of the initial metal loading considering the result of the analysis and the metallic film thickness.

According to one embodiment, insulating matrix volume may be determined by the volume of the metallic layer - volume of the metallic particles inside.

As mentioned above, the multilayered composite material according to the invention has a volume fraction which does not correspond to the critical volume fraction $\phi^*$, but to a volume fraction $\phi$ which is slightly higher than the critical volume fraction $\phi^*$.

According to the invention, the term "slightly higher" may be interpreted as included in an interval between 0 (value not included) and 5% (value included) above the critical volume fraction $\phi^*$.

$\delta\phi$ is a small positive number.

According to an embodiment, $0<\delta\phi\leq4\%$, preferably $0.2\%<\delta\phi\leq3\%$ and more preferably $0.4\%<\delta\phi\leq3\%$ and even more preferably $0.4\%<\delta\phi\leq2\%$.

A subject of the present invention is also a process for manufacturing a multilayer composite material of the invention comprising the steps consisting in:

- providing a base layer
- providing on the base layer a metallic layer consisting of an insulating matrix phase and of a metallic particles phase, said metallic particles being homogeneously distributed in the insulating matrix, wherein a volume fraction $\phi$ being the ratio between the volume of metallic particles and the volume of the metallic layer corresponds to the critical volume fraction $\phi^* + \delta\phi$, with $0<\delta\phi\leq5\%$,; $\phi^*$ being the volume fraction for which an increase of conductivity of the metallic layer as a function of the volume fraction $\phi$ has a maximum value.

The metallic layer may be provided on the base layer according to various methods of thin film deposition from liquid solutions, as known in sol-gel process or polymer processing: spin or dip coating, blade coating, sputtering...

The composite material of the present invention may be manufactured by finely controlling the metallic particles loading in the insulating matrix.

The applicants found this fine control is possible by controlling an irradiation dose made on a layer comprising a photocatalytic material since an increase of irradiation time provides an increase in the volume fraction of metallic particle in the composite material.

Therefore, since the metal loading may be controlled by irradiation time, a very fine tuning around the percolation threshold may be carried out and this has permitted the experimental determination of a discrete number of well-defined parameters such as resistance R or the Gauge factor GF as a function of $\phi$ so as to determine the critical volume fraction $\phi^*$.

Therefore, another subject of the present invention is a process for manufacturing a multilayer composite material of the invention comprising the steps consisting in:

- providing a base layer
- providing on the base layer a layer comprising a photocatalytic material;
- contacting the base layer covered by the layer comprising a photocatalytic material with a solution containing metal ions selected from the group consisting of silver, gold, palladium platinum, cobalt and nickel ions, and
- irradiating the base layer covered by the layer comprising a photocatalytic material with radiation permitting activation of the photocatalytic material, for a time sufficient to have a volume fraction being the ratio between the volume of metallic particles and the volume of the metallic layer corresponds to a critical volume fraction $\phi^* + \delta\phi$, with $0<\delta\phi\leq5\%$, the critical volume fraction $\phi^*$ being the volume fraction for which an increase of conductivity of the metallic layer as a function of the volume fraction $\phi$ has a maximum value.

According to the invention, for a given base layer, for a given photocatalytic material, for a given concentration of metallic ions in the solution, for a given power of the irradiation and for a given wavelength, it is possible to plot a calibration curve $t=f(\phi)$ so as to match a time of irradiation with a volume fraction of metallic particles.

The photocatalytic material should have a large band gap material so that the absorbance band lies within the visible part of the spectrum so that photogenerated electrons have a sufficient redox potential allowing for the metal reduction.

Moreover the characteristic life time for the recombination of electron- hole pair should be significantly longer than the reaction time of electron or hole with the metal ions.

For example, the photocatalytic material may be a metal oxide or a chalcogenure that are known for their photoreduction properties.

According to a preferred embodiment, the photocatalytic material is selected from the group of metal oxides consisting of titanium dioxide, zinc oxide, bismuth oxide and vanadium oxide, tungsten oxide, iron oxide, $BiFe_2O_3$ or a mixture thereof or any solid solutions of thereof.

Especially preferably, the photocatalytic material is titanium dioxide $TiO_2$ because of its well-known photocatalytic properties.

The solution containing metal ions may be selected from a salt solution, for example based on nitrate, chloride, acetate, sulfate or tetrafluoroborate.

Preferred solutions are:

- a solution of silver nitrate (for Ag), or
- a solution of gold chloride (HAuCl4) (for Au), or
- a solution of palladium chloride (PdCl2) (for Pd), or
- a solution of platinum chloride (H2PtCl6) (for Pt).
- a solution of nickel chloride (NiCl$_2$. 6H$_2$O) ( for Ni) The solvent may be a water/isopropanol mixture.

The concentration of ions in the solution may be comprised between $10^{-5}$mol and $10^{-1}$mol, preferably between $10^{-5}$mol and $10^{-3}$mol.

The radiation for activating the photocatalytic material is preferably a source having a wavelength in the absorbtion band of the photocatalytic material. In particular, when the photocatalytic material is TiO$_2$, irradiation may typically be carried out by a source having a wavelength of less than approximately 380 nm, preferably 312 nm

The volume fraction of metallic particles within the matrix depends upon the total photon exposure that is determined by the intensity of the lamp and the absorption band of the photocatalytic material.

Under preferred conditions for implementing the invention, the process for fabrication the multi-layered composite material of the invention comprises the steps consisting in:

a) depositing by a sol-gel route, on a base layer, a first layer of a material, mesostructured by a templating agent, said material comprising a photocatalytic material and a material containing silica and;

b) depositing by a sol-gel route, on the first layer, a second layer of a material, mesostructured by a templating agent, said material comprising a material containing silica and being free from photocatalytic material;

c) performing a heating treatment of the first and second layers whereby a consolidated coating is obtained;

d) contacting the consolidated coating obtained in step c) with a solution containing metal ions selected from the group consisting of silver, gold, palladium platinum, nickel and cobalt ions, and

e) irradiating the base layer covered by the consolidated coating with radiation permitting activation of the photocatalytic material, for a time sufficient to reach a volume fraction $\phi$ being the ratio between the volume of metallic particles and the volume of the metallic layer corresponds to a critical volume fraction $\phi^* + \delta\phi$, with $0 < \delta\phi \le 5\%$, the critical volume fraction $\phi^*$ being the volume fraction for which an increase of conductivity of the metallic layer as a function of the volume fraction $\phi$ has a maximum value.

The multi-layered composite material obtained by the previous described method is composed of 3 different layers. Indeed, figure 2 gives a schematic diagram of such multilayered composite material which consists of a coating of two layers on a substrate. The intermediate layer (or active layer) 2 of said coating corresponds to the porous silica film containing initially photocatalytic nanoparticles deposited onto the base layer 1, and the third layer 3 (or passivating layer) of said coating corresponds to porous silica.

The passivating layer improves the homogeneity of the metallic particles deposit by confining said particles in the active layer.

**Step a) Formation of the first layer**

The method according to the invention comprises a step a) consisting of forming by the sol-gel route, on a substrate, a first layer of a mesostructured material by a templating agent. This material initially comprises a material containing silica and a photocatalytic material.

The material containing silica and the photocatalytic material may represent, together, at least 30 wt %, preferably at least 50 wt % of said material, the remainder being formed by the templating agent and any impurities introduced by the sol-gel process.

Sol-gel processes are processes that are well known by a person skilled in the art, for forming a solid, amorphous three-dimensional network by hydrolysis and condensation of precursors in solution.

The first layer of mesostructured material, formed in step a) of the method, contains a material comprising silica, a photocatalytic material and a templating agent, preferably an organic templating agent.

Preferably, the material comprising silica represents between 0 and 45 wt % of the mesostructured material.

The templating agent preferably represents between 5 and 60 wt % of the mesostructured material. The use of templating agents for forming mesostructured or mesoporous materials is well known. This templating agent has the technical effect of forming mesopores in this material.

The term "mesopores" denotes pores with a diameter between 2 and 50 nm (nanometers). Mesoporous materials are obtained by removing the templating agent, for example by calcination.

Until the templating agent has been removed, the material is called "mesostructured", i.e. it is provided with mesopores filled with templating agent. The templating agent should be selected that there is open porosity in the film. The presence of open porosity helps the metal nanoparticles to connect with each other and hence to have a conducting path between two ohmic contacts. Open porosity also allows diffusion of the metal salt in the vicinity of the photocatalyst. The templating agent may be a polymer or a surfactant.

When the templating agent is a polymer, block copolymers are used, preferably block copolymers based on ethylene oxide and propylene oxide.

When the templating agent is a surfactant, it is preferably selected from nonionic surfactants.

Examples of nonionic templating agents that are preferred in the present invention are poloxamers, such as those marketed under the name Pluronic®.

It is also possible to use cationic surfactants, for example surfactants with a quaternary ammonium group.

The photocatalyst should have a large band gap material so that the absorbance band lies within the visible part of the spectrum. More over the characteristic life time for the recombination of electron- hole pair should be significantly longer than the reaction time of electron or hole with the metal ions.

The photocatalytic material is preferably a metal oxide or a chalcogenure.

The photocatalytic material is preferably a metal oxide and is selected from the group consisting of titanium dioxide, zinc oxide, bismuth oxide and vanadium oxide,$WO_3$, iron oxide, $BiFe_2O_3$ or a mixture thereof or any solid solutions of thereof. Especially preferably, the photocatalytic material is titanium dioxide $TiO_2$.

When silica is present in the first layer, the weight ratio of photocatalytic material to silica in the first layer is between 0.05 and 2.7. Amount of silica present in the layer provides mechanical stability to the film.

When the photocatalytic material is titanium dioxide, the atomic ratio Ti/Si is preferably between 0.05 and 2, in particular between 0.5 and 1.5, and more preferably between 0.8 and 1.2 so to have an efficient and fast photocatalytic effect.

The photocatalytic material according to the invention is in the physical form that it requires so that it effectively has photocatalytic properties. For example, $TiO_2$ must be at least partially crystalline, preferably in anatase form.

According to one embodiment of the present invention, the photocatalytic material is present in the first layer in the form of particles in a silica insulating matrix. For example, the diameter of the nanoparticles is between 0.5 and 300 nm, notably between 1 and 80 nm. These nanoparticles may themselves consist of smaller grains or elementary crystallites. These particles may also be agglomerated or aggregated with one another.

According to the present invention, the base layer may consist of any suitable solid material. For example, it may be plastic material, silicon substrate, glass substrate, or any conducting substrate with an insulating layer before the first coating. The base layer is preferably thin glass substrate.

Step a) of the method according to the invention may comprise the following substeps:

i) preparing a sol containing at least one silica precursor, preferably a tetraalkoxysilane, such as tetraethoxysilane, dissolved in an aqueous-organic solvent containing a catalyst of acid or basic hydrolysis as well as the templating agent;
ii) adding photocatalytic material, preferably in the form of nanoparticles, to this sol;
iii) applying the suspension obtained on a substrate. Typically, the aqueous-organic solvent is an alcohol/water mixture, the alcohol typically being methanol or ethanol.

The sol may be applied on the substrate by techniques that are known by a person skilled in the art, for example by spin coating, by dip coating , by roll coating or by sputtering.

**Step b) Formation of the second layer**

Step b) of the method according to the invention consists of sol-gel deposition, on the first layer of a second layer of a mesostructured material by a templating agent, said mesostructured material comprising a material containing silica, and said mesostructured material being free from photocatalytic material.

In particular, the silica precursor (tetraalkoxysilane), the catalyst, the solvent and the templating agent may be the same as those used for the first layer.

The sol-gel process may also be implemented in the same way.

According to another embodiment, the first coating may be submitted to a treatment of maturation before depositing the second layer, said treatment of maturation consisting of keeping the first layer under a humid atmosphere, at room temperature, for a time between 15 minutes and 2 hours and also heating at a temperature of 110°C for 10 to 20 minutes. The relative humidity (RH) of said atmosphere is preferably between 60 and 80%.

Step b) of the method according to the invention may comprise the substeps consisting of:

i) preparing a sol containing at least one silica precursor, preferably a tetraalkoxysilane, such as tetraethoxysilane, dissolved in an aqueous-organic solvent containing a catalyst of acid or basic hydrolysis as well as the templating agent;
ii) applying this sol on the first layer, formed during step a).

According to one embodiment, this second layer is deposited in the same way as the first layer, the only difference being absence of the photocatalytic material.

**Step c): Heating treatment(s)**

According to the invention, a first heating treatment called "consolidation treatment" is carried out on the substrate covered by the first layer and the second layer. The temperature of the consolidation treatment is between 50 and 250°C, preferably between 80 and 120°C.

This consolidation treatment enables consolidating the first and the second layer and to provide a material having good chemical stability and good mechanical properties.

Then, optionally, a second heating treatment at higher temperature called "calcination treatment" may be carried out on the substrate covered by the first layer and the second layer.

The temperature of the calcination treatment, depending on the nature of the substrate is between 200°C and 450°C, preferably between 300 and 450°C for a time between 2-4 hours.

This calcination treatment enables eliminating the templating agent and other organic impurities.

This is preferred in the case where the substrate may withstand higher temperature.

**Step d) contacting the coating with a solution containing metal ions**

Step d) of the method according to the invention consists in contacting the consolidated coating, obtained in step c), with a solution containing metal ions, the metal being selected from the group consisting in Ag, Au, Pd, Pt, Ni and Co and is preferably Ag.

The solution containing metal ions may be selected from a salt solution, for example based on nitrate, chloride, acetate, or tetrafluoroborate.

Preferably, it is:

- a solution of silver nitrate (for Ag), or
- a solution of gold chloride ($HAuCl_4$) (for Au), or
- a solution of palladium chloride ($PdCl_2$) (for Pd), or
- a solution of platinum chloride ($H_2PtCl_6$) (for Pt).
- a solution of nickel chloride ($NiCl_2 . 6H_2O$) ( for Ni) The solvent may be a water/isopropanol mixture.

The concentration of ions in the solution may be comprised between $10^{-5}$mol and $10^{-1}$mol. Preferably, the concentration of ions in the solution is $5x10^{-4}$mol.

According to a first embodiment of the method of the present invention, the coating formed by superposition of the first and second layers, consolidated together, is brought in contact with the solution of metal ions, in particular by immersion, while the irradiation is carried out. This ensures a constant supply of metal ions.

According to another embodiment of the present invention, the active layer is impregnated with the desired salt and dried followed by a dry-irradiation.

According to a second embodiment of the present invention, the coating is first impregnated with the solution of metal ions, then it is rinsed and/or dried, and then irradiated. In other words, in this embodiment, the coating is not in contact with the solution of metal ions during irradiation. This embodiment offers the advantage of being easier to carry out, as irradiation may take place separately in time and in space from the solution with the coating and allows for in situ monitoring the GF. However, it is necessary for sufficient metal ions to be introduced into the coating, prior to the irradiation step, so that the volume fraction $\phi^* + \delta\phi$, with $0 < \delta\phi \leq 5\%$ may be reached.

The aim of the invention is to provide a composite material having a high sensitivity. This high sensitivity is directly correlated to a figure of merit F of the composite material. Indeed, the highest figure of merit F as possible is desired in the composite material of the present invention.

According to the invention, the figure of merit is defined as $F = <GF>/\sigma_{GF}$, where $<GF>$ denotes the mean gage factor (signal) and $\sigma_{GF}$ is the fluctuation in measuring each values of GF in the experiment (noise).

Experimental data have shown that the maximum figure of merit does not correspond to $\phi^*$ but to $\phi^* + \delta\phi$, with $0 < \delta\phi \leq 5\%$.

Therefore, another object of the present invention is a process for manufacturing a multilayer composite material of the invention comprising the steps consisting in:

a) providing a base layer

b) providing on the base layer a layer comprising a photocatalytic material;

c) contacting the base layer covered by the layer comprising a photocatalytic material with a solution containing metal ions selected from the group consisting of silver, gold, palladium platinum, cobalt and nickel ions, and

d) irradiating the base layer covered by the layer comprising a photocatalytic material with radiation during a time t

e) matching the time t of irradiation with a volume fraction $\phi$ with a calibration curve t=f($\phi$)

f) Measuring GF with the following formula

$$GF = \frac{\Delta R}{R0}\frac{1}{\Delta \varepsilon}$$

wherein

$\Delta R$ is the difference of the resistance measured on a sample corresponding to a difference of applied stress on said sample;

R0 is the resistance measured on a sample under no stress; and

$\Delta\varepsilon$ is the strain induced by the applied stress.

g) repeating m times the measure of GF for calculating the average of GF given by the general formula

$$< GF > = \frac{1}{m}\sum_{j=1}^{m} GFj$$

h) Measuring the standard deviation of GF measurements with the following formula;

$$\sigma GF = \sqrt{\frac{[\sum(GFj) - < GF >]2}{m}}$$

i) Measuring the figure of merit F with the following formula

$$F = \frac{< GF >}{\sigma GF}$$

j) Measuring dF/d$\phi$.

k) if dF/d$\phi$=0; the maximum value of F Fmax is obtained and the irradiation is stopped

l) if dF/d$\phi$ > 0; irradiating the composite material during a further time and repeating the steps b) to j) until the requirement of step k)is fullfiled.

In the above described method, the Gauge Factor GF may be determined in the same way as described previously. According to this embodiment, in order to calculate the average of the Gauge Factor <GF>, the measure of GF is performed over m cycles.

According to the invention, m is comprises between 100 and 500, preferably between 200 and 300.

Under other preferred conditions for implementing the invention, the metallic layer may be provided on the base layer with method such as spin coating, dip coating, roll coating or by sputtering.

The composite materials according to the invention have advantageous piezoelectric properties.

Indeed, experimental data have shown that the best way to use the composite material according to the invention is to use a composite material exhibiting a volume fraction of metallic particles which does not correspond to a maximum value of the Gauge factor (i.e at the percolation threshold) but slightly above said percolation threshold corresponding to the volume fraction $\phi^* + \delta\phi$, with $0 < \delta\phi \leq 5\%$, wherein a maximum value of the figure of merit Fmax is obtained.

Therefore, another object of the present invention is the use of a piezoresistive material according to the invention or obtained by the method according to the invention as a strain gauge.

Strain gauges may be used to directly measure strain, or to measure some other transduced quantity.

Another object of the present invention is a process for determining strain on a sample comprising the steps consisting of:

- placing a composite material according to the invention having a given Gauge Factor on a material solicited by a stress;
- determining the resistance variation of the composite material;
- measuring the strain induced in solicited material

Example applications where an order-of-magnitude increase in sensitivity may enable the use of strain gauges include but are not limited to: i) real-time measurement of small strains in structural components such as parts of buildings and fuselage components on aircraft, ii) point-of-care medical systems such as blood pressure and heart rate monitors and iii) surface quality control on production lines using fully automated atomic force microscopes.

Specifically :

i) the ability to log very small strains in structural components may be used to predict future structural failure, enabling either the re-design or replacement of components before failure. The example of aircraft fuselage components is particularly telling: commercial aircraft lose money while on the ground, and a large fraction of the time spend on the ground is for maintenance and verification of the mechanical integrity of various parts of the aircraft. The ability to log mechanical stresses in real time (i.e. in flight), avoids the necessity to verify individual parts on the ground.

ii) a major application of interest to manufacturers of strain gauges is point-of-care (i.e in the home etc...) medical systems. Here small pressure changes (and thus small strains) must be measured by a pressure transducer with strain gauge placed, for example, on the skin. These pressure changes may be below those which may easily be measured using conventional silicon strain gauges.

iii) quality control of surfaces (roughness, planarity, etc) is important in many industries, including in the semiconductor industry where automated atomic force microscopes are used. These machines use microcantilevers whose motion due to surface topographic variations is detected using reflected laser light. When cantilevers inevitably break, they must be replaced by a robot and alignment of both the incident laser and the reflected light detector must be accomplished automatically. This is a complex task which requires expensive instrumentation to accomplish. Detection of reflected light is the preferred solution because cantilever movements corresponding to nanometer scale variations in topography may be measured. This is outside the range of what is possible with commercial silicon strain gauges, but the composite material of the present invention has sufficient sensitivity to detect such variations. Electrical detection of cantilever motion eliminates the need for the complex alignment procedures discussed above.

Moreover, the multilayered composite material of the invention is particularly interesting in nano-electromechanical systems and for low power remote application where electrical power supply is limited.

Indeed, the power consumed in a resistance R placed in a Wheatstone bridge with input voltage, $V_{in}$, is proportional to $V_{in}^2/R$. The output voltage of the bridge is proportional to $V_{in}GF$, where GF is the gauge factor of the strain sensor in the active arm of the bridge. In this invention the gauge factor at the optimal filling factor is of the order of 1000, a factor of 10 higher than the best silicon strain gauges. Thus, instead of using the gauge for its high sensitivity, it is possible to maintain the output voltage with $V_{in}$ a factor of 10 smaller than that used with a silicon strain gauge. In this case, for resistors with the same resistance, the consumed power is a factor of 100 smaller than in the case of a silicon strain gauge. This is attractive for mobile or remote applications where battery life is important. Examples include accelerometers in handheld mobile devices and stress monitoring in remote infrastructure such as rail networks.

Figure 1a is schematic diagram of a coating (top view) showing the electrical connections and the direction of the applied stress.

Figure 1b is a side view of the principle used to apply a stress on the piezoresistive material in order to test its piezoresistive properties as a function of $\phi$.

Figure 2 is a schematic view (cross section) of a piezoresistive material obtained by a method according to the invention.

Figure 3 is a curve representing R=f(#).

Figure 4 is a curve representing GF=f($\phi$).

Figure 5 is curve showing the plot of the gauge factor GF (bottom panel), the standard deviation (middle panel) and the figure of merit F (top panel) versus the volume fraction $\phi$.

Figure 6 is a top view of the coating with ohmic contacts.

Figure 7 is a top view of the coating at several different UV exposure times.

Figure 8 is calibration curve showing the plot of absorbance versus the volume fraction.
Figure 9 is a curve showing the plot of absorbance and the brightness versus the time of irradiation.

The invention will now be described by means of the following Examples

## EXAMPLES

**Manufacturing of the multilayered composite material according to the invention**

*From step a) to step c) formation of the coating and treatment of maturation*

Solution (1) is obtained by mixing the following compounds and heating the resulting mixture at 60°C under reflux and mixing for 1 hour

- 11 mL of TEOS (tetraethoxysilane)(precursor)
- 11 mL of ethanol (aqueous organic solvent)
- 4,5 mL of HCl at pH=1,25 (catalyst)

Solution (2) is obtained by dissolving 2,205 g of BASF Pluronic® PE6800 in 20 mL of ethanol

Solution (3) is obtained by addition of 10 mL of solution (1) into solution (2).

Solution (3) is then filtered with a 450 nm NYLONfilter.

To 4 mL of filtered solution (3) is added. 857mL of $TiO_2$ S5-300A colloidal suspension (Cm = 231 g/L) supplied by Crystal Global.

The resulting mixture is then mixed.

This solution is deposited on a soda-lime glass substrate (thickness 20$\mu$m) by spin coating (2000 rpm for 1 minute). A substrate coated with a first layer is thus obtained and is kept under a humid atmosphere (HR = 65%) using a saturated solution of magnesium acetate for 30min.

A further layer is then deposited onto the first layer using solution (3). Deposition is achieved by spin coating under the same conditions as for the deposition of the first layer, including the storage under controlled humidity atmosphere.

The first and second layers are called "coating".

A substrate coated with the coating is then heated at 450°C for 2 hours whereby a consolidated coating is obtained.

*Step d) Contacting the coating with a solution containing metallic ions and step e) irradiating said coating to reach $\phi$*+ 0,3%*

A drop of AgN03 solution is placed so that it could cover the active area of the coating (i.e region C on figure 2). The coating was then irradiated with UV light (wavelength of 312 nm, and Power = 1 mW/cm$^2$) for different times.

For each time of irradiation, the coating was then rinsed with water and dried before performing a resistance measurement.

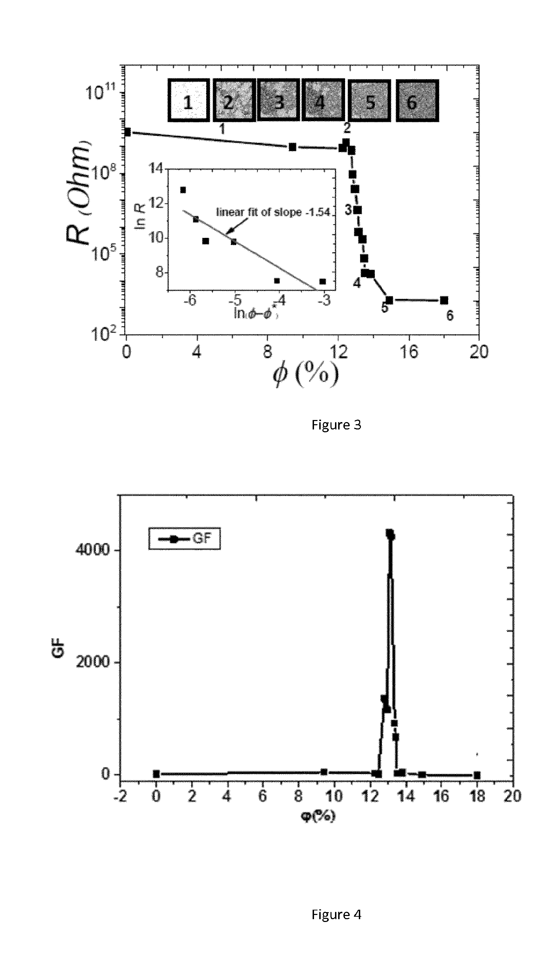

In order to determine $\phi$*, a calibration curve R=f($\phi$)has been plotted (see figure 3).

The figure 3 shows a very sharp transition (points 3, 4 and 5) from a highly resistive region (points 1 and 2) to conducting region (point 6) for $\phi$ between 12.5 % and 13.5 %. With this method, $\phi$* is estimated around 13%.

In order to have a more accurate value of $\phi$*, a calibration curve GF= f($\phi$) has been plotted (see figure 4). Figure 4 clear cut and very sharp peak in GF is observed, with a maximum value (4330) at $\phi$ =$\phi$ * = 13.1 % (corresponding to a time of irradiation of 15 minutes at a power of 1mW/cm$^2$) well above that of bulk or nano-structured silicon.

From these determined value $\phi$* obtained from the curve GF= f($\phi$), it is possible to manufacture the multilayered composite material of the invention by adding 0.3% to the value of $\phi$*, corresponding to an illumination time of 15 minutes and 20 seconds.

**Example 2: Correlation with the maximum value of the figure of merit F**

The sample obtained in step d) of Example 1 was irradiated for various times.

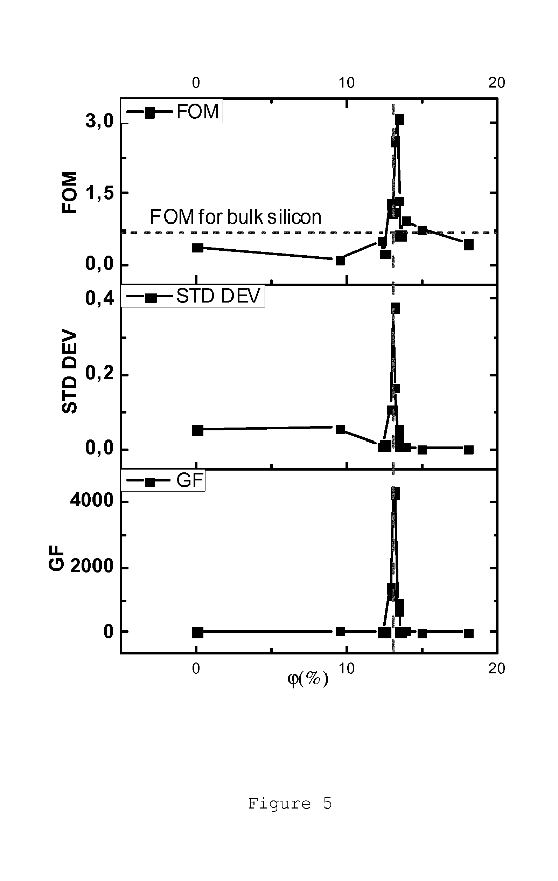

The values of the Gauge Factor, standard deviation of the Gauge Factor and the figure of merit plotted for a well discrete number of well-defined $\phi$ values (corresponding to a given time of irradiation - see above the correlation between the time of irradiation and the volume fraction) are shown in figure 5.

As shown in figure 5 (bottom panel), a clear cut and very sharp peak in *GF* is observed, with a maximum value (4330) at $\phi$ =$\phi$*~13.1 % (corresponding to a time of irradiation of 15minutes at a power of 1mW/cm$^2$) well above that of bulk or nano-structured silicon. In other samples, values of up to ~12000 have been observed (data not shown). Here the peak of GF occurs close to the 16 % expected for 3-dimensional continuum percolation in a randomly distributed network of spheres.

Figure 5(middle panel) shows $\sigma_{GF}$ measured as a function of $\phi$ and, as expected, it does indeed show a maximum at $\phi^*$. Here the measurement of *GF* is repeated 200 times so that the value of $\sigma_{GF}$ is reliable. $\sigma_{GF}$ is also found to obey a power law of exponent 0,97 (data not shown), close to the expected value near $\phi^*$.

The figure of merit F (or FOM) versus irradiation time may then be plotted as shown in figure 5 (top panel), and a number of important points are of interest on this calibration curve.

The first point is that *FOM (Figure Of Merit)* is not maximized at $\phi*$ but rather at $\phi* + 0.3 \%$ i.e. slightly on the conducting, metallic side of the percolation threshold.

Thus, in this example, Fmax is reached for an irradiation time corresponding to 15 minutes and 20 seconds (i.e for a volume fraction of 13.4%).

The peak value of *FOM* determined here is 3 which is approximately 5-10 times higher than *the FOM value* measured in bulk silicon (see respectively the dashed horizontal line in the top panel of Figure 4 which was measured separately). Therefore, according to the invention, it is possible to know that an optimized piezoresistive material (having the same material and being prepared by the same way as for the piezoresistive material for which a calibration curve F=f($\phi$) has been obtained) may be obtained for an illumination time of 15 minutes and 20 seconds at a wavelength of 312 nm at power 1 mW/cm$^2$.

**Annexed experimental parts of examples 1 and 2: ohmic contact preparation for resistance measurements, gauge factor measurements, correlation between the volume fraction of metallic particles and the irradiation time.**

*Ohmic Contact preparation technique:*

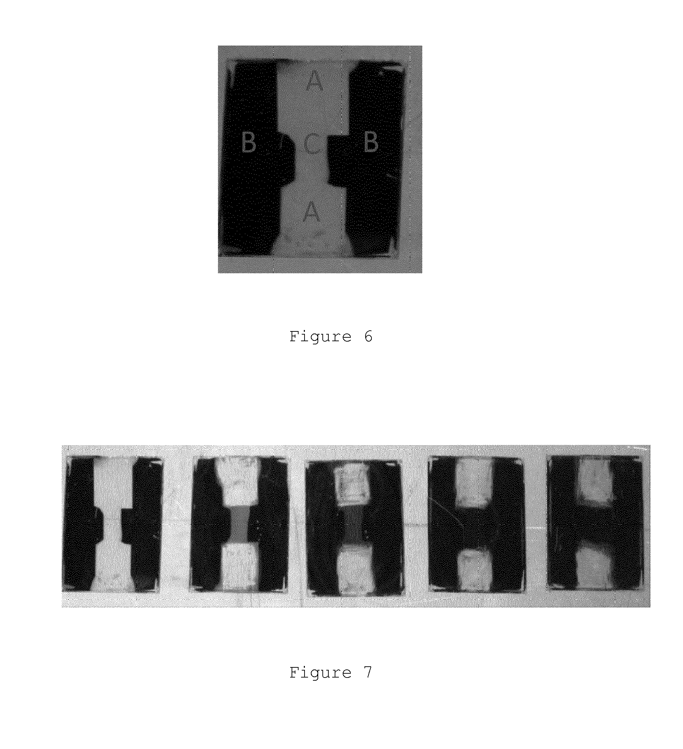

In view of performing the resistance measurements to determine the value of the resistance or the value of the Gauge Factor as a function of $\phi$, it is necessary to form ohmic contacts on the coating. To this end, the coating is first masked using Kapton® mask at the center (region A and the active area of the film shown by region C in Figure 6).

The unmasked parts (region B in Figure 6) are loaded with silver by immersing the coating in an aqueous solution of AgNO$_3$ 0,05M: isopropanol mixture (1:1 volume ratio).

Irradiation is then performed with UV light (312nm,1mW/cm2 for 50 minutes) leading to the photocatalytic reduction of Ag+ ions into metallic silver particles. The irradiation time ensures the loading of silver in the coating up to saturation, i.e. about 18 vol%. After rinsing and drying of the coating, the silver loaded patterns form the two conducting terminals as shown schematically in Figure 6.

In a further step, the coating of the unexposed area (region A in figure 6) (initially under the kapton mask) except the central area (region C in figure 6) of the sample (5 mm x 5 mm square) is removed mechanically by scratching. The remaining central area (C) between the two conducting terminals (B) is the active area of interest, whose electrical properties are measured.

Finally, the two conducting terminals (B) are connected to external copper wires using silver paints.

*Determination of the parameters: GF, <GF> and $\sigma$GF*

The sample with the ohmic contact as shown in figure 1a is glued at the center of a steel plate as shown schematically in figure 1b (length= 50 cm, thickness = 0,6 mm and width = 5cm) with a cyanolit® 202 glue.

A compressive force is applied to the two ends of the steel plate. The plate deforms into a sinusoidal shape of half-wavelength L and amplitude H. As a result, the piezoresistive material undergoes an uni-axial tensile stress.

The applied stress is modulated (by modulating the force applied to the two ends of the steel plate). The amplitude of the sinusoid between H1 and H2 is then obtained over 200 cycles.

The DC resistance is measured using a voltage source and an earthed pico-ammeter.

The current is always kept below 1$\mu$A to avoid unwanted fluctuations in the resistance measurements.

The resistance is measured at each stress level (Height denoted by H1 and H2), named respectively R(H1) and R(H2).

The Gauge Factor (GF) is measured by taking the ratio of the difference in the resistances in each cycle to the value of the resistance R(H1) and R(H2) measured for the lower (R(H1)) stress in the same cycle and the multiplied by the applied stress difference.

$$GF = \frac{R(H2) - R(H1)}{Rav} \times \frac{1}{\Delta \varepsilon}$$

The measure is then repeated for 200 cycles and the average value of GF is calculated.

$$< GF > = \frac{1}{m} \sum_{j=1}^{m} GFj$$

With the <GF> value, it is then possible to calculate the standard deviation $\sigma GF$ and then to determine $F_{GF}$.

$$\sigma GF = \sqrt{\frac{[\sum (GFj) - < GF >]2}{m}}$$

To make the correlation between time of irradiation and volume fraction $\phi$, the image of the sample at various irradiation times (corresponding to different volume fractions) is shown in Figure 7).Increasing the silver loading provides an increased absorption of the films which exhibit a yellow to dark brown color.

In a previous work, an experimental curve was made plotting the absorbance at different wavelength as a function of the silver loading, $\phi$ as determined by chemical analysis. Chemical analysis was achieved by dissolving with nitric acid the silver particles located in a silver loaded film of a known area and thickness.

The solution is then analyzed for its silver ions content by ICP. The results enable to calculate the initial silver volume fraction in the film.

Knowing the absorbance versus $\phi$ curve, it is possible to determine the silver loading in a film after measuring its absorption.

Images of the samples for various irradiation times were taken (maintaining the same focusing and light condition).

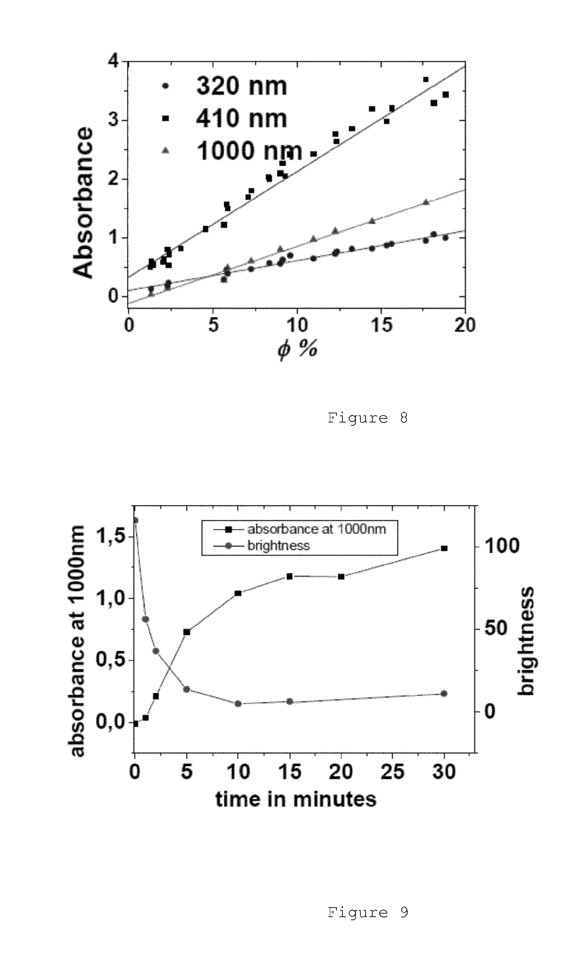

A second curve was experimentally determined, plotting the brightness of the active area (C) as quantified using the imageJ software (Figure 9) as a function of the irradiation time. The brightness is defined as the mean of the histogram of the distribution of the gray values.

Using the previously determined absorbance versus volume fraction curve (figure 8), one thus may determine the silver loading as a function of the brightness of the active area which is directly linked to the time of irradiation.

**Example 3: Comparison between the figure of merit of commercial strain gauges and the figure of merit of a composite according to the invention**

The figure of merit of two commercial strain gauges (one metallic gauge and one silicium gauge (Si gauge)) was calculated from the average of gauge factor <GF> and standard deviation $\sigma_{GF}$ (which are well-known from the user) with the following formula F=<GF>/ $\sigma_{GF}$.

The figure of merit of the composite material obtained according to example 1 was calculated and compared with the figures of merit of commercial gauges.

The results are summarized in the following table.

| | G (expected) = <G> $\pm \sigma_G$ (for a operating strain of $1*10^{-4}$) | F = <G>/$\sigma_G$ |
|---|---|---|
| Composite material according to example 1 | 1000$\pm$330 | 3 |
| Metallic gauge _Type :_ KFG-1-120-C1-11. | 2.11$\pm$3.51 | 0,6 |
| Si gauge _Type_ : SS-060-040-2500-PM | 140$\pm$200 | 0,7 |

The above table underlines that the figure of merit of the composite material according to the invention is 6 times higher than the figure of merit of metallic and silicium gauges.

Therefore, the composite material according to the invention is more sensitive than the commercial strain gauges.

## Conclusions

The method according to the invention underlines that the best way to use a composite as a strain gage is therefore to use a composite material exhibiting a volume fraction of metallic particles which do not correspond to a maximum value of the Gauge factor (i.e at the percolation threshold) but slightly above said percolation threshold corresponding to a maximum value of the figure of merit Fmax.

It is shown that because fluctuations in *GF* diverge at $\phi^*$ (i.e higher standard deviation at this point), use of any composite at the percolation threshold ($\phi^*$) is not recommended. It is shown experimentally that the optimal Ag volume fraction lies less than 1 % to the metallic, conducting side of $\phi^*$. In this case a figure-of-merit for a nano-composite strain gage is shown to be 5-10 times larger than the equivalent in commercial strain gages. The optimal exploitation of composites as strain gages therefore requires the ability to finely control the metallic volume fraction.

## Claims

1. A multilayer composite material comprising:

   - a base layer
   - a metallic layer consisting of an insulating matrix phase and of a metallic particles phase, said metallic particles being distributed in the insulating matrix, wherein a volume fraction $\phi$ being the ratio between the volume of metallic particles and the volume of the metallic layer corresponds to a critical volume fraction $\phi^* + \delta\phi$, with $0 < \delta\phi \leq 5\%$, the critical volume fraction $\phi^*$ being the volume fraction for which an increase of conductivity of the metallic layer as a function of the volume fraction has a maximum value.

2. The multilayer composite material according to claim 1, wherein metallic particles are selected in the group consisting of silver, gold, palladium, platinum, cobalt and nickel particles.

3. The multilayer composite material according to claims 1 or 2, wherein the diameter of the metallic particles is comprised between 1 and 500nm.

4. The multilayer composite material according to any one of claim 1-3, wherein the value of $\phi^*$ is determined by a method comprising the following steps:

   - Plotting a calibration curve $R=f(\phi)$; and
   - Determining the inflection point of the curve, said inflection point corresponding to $\phi^*$.

5. The multilayer composite material according to any one of claim 1-3, wherein value of $\phi^*$ is determined by the method comprising the following steps:

   - Plot a calibration curve $GF=f(\phi)$; and
   - Determining the maximum point of the curve or the point where $d(GF)/d(\phi)$ is null, said point corresponding to $\phi^*$.

6. The multilayer composite material according to any one of claim 1-5, wherein $0<\delta\phi\leq 4\%$.

7. A process for manufacturing a multilayer composite material of the invention comprising the steps consisting in:

   - providing a base layer
   - providing on the base layer a metallic layer consisting of an insulating insulating matrix phase and of a metallic particles phase, said metallic particles being distributed in the insulating matrix, wherein a volume fraction $\phi$ being the ratio between the volume of metallic particles and the volume of the metallic layer corresponds to a critical volume fraction $\phi^* + \delta\phi$, with $0< \delta\phi\leq 5\%$, $\phi^*$ being the volume fraction for which an increase of conductivity of the metallic layer as a function of the volume fraction $\phi$ has a maximum value.

8. A process for manufacturing a multilayer composite material of the invention comprising the steps consisting in:

- providing a base layer
- providing on the base layer a layer comprising a photocatalytic material;
- contacting the base layer covered by the layer comprising a photocatalytic material with a solution containing metal ions selected from the group consisting of silver, gold, palladium platinum, cobalt and nickel ions, and
- irradiating the base layer covered by the layer comprising a photocatalytic material with radiation permitting activation of the photocatalytic material, for a time sufficient to have a volume fraction $\phi$ being the ratio between the volume of metallic particles and the volume of the metallic layer corresponding to a critical volume fraction $\phi^* + \delta\phi$, with $0 < \delta\phi, \leq 5\%$, $\phi^*$ being the critical volume fraction for which an increase of conductivity of the metallic layer as a function of the volume fraction has a maximum value.

9. The process according to claim 8 comprising the steps consisting in:

a) depositing by a sol-gel route, on a base layer, a first layer of a material, mesostructured by a templating agent, said material comprising a photocatalytic material and a material containing silica and;
b) depositing by a sol-gel route, on the first layer, a second layer of a material, mesostructured by a templating agent, said material comprising a material containing silica and being free from photocatalytic material;
c) performing a heating treatment of the first and second layers whereby a consolidated coating is obtained;
d) contacting the consolidated coating obtained in step c) with a solution containing metal ions selected from the group consisting of silver, gold, palladium platinum, nickel and cobalt ions, and
e) irradiating the base layer covered by the consolidated coating with radiation permitting activation of the photocatalytic material, for a time sufficient to have a volume fraction $\phi$ being the ratio between the volume of metallic particles and the volume of the metallic layer corresponding to a critical volume fraction $\phi^* + \delta\phi$, with $0 < \delta\phi, \leq 5\%$, $\phi^*$ being the critical volume fraction for which an increase of conductivity of the metallic layer as a function of the volume fraction $\phi$ has a maximum value.

10. Process for manufacturing a multilayer composite material of anyone of claims 1 to 6 comprising the steps consisting in:

a) providing a base layer
b) providing on the base layer a layer comprising a photocatalytic material;
c) contacting the base layer covered by the layer comprising a photocatalytic material with a solution containing metal ions selected from the group consisting of silver, gold, palladium platinum, cobalt and nickel ions, and
d) irradiating the base layer covered by the layer comprising a photocatalytic material with radiation during a time t
e) matching the time t of irradiation with a volume fraction $\phi$ with a calibration curve $t=f(\phi)$
f) Measuring GF with the following formula

$$ GF = \frac{\Delta R}{R0} \frac{1}{\Delta \varepsilon} $$

wherein
$\Delta R$ is the difference of the resistance measured on a sample corresponding to a difference of applied stress on said sample;
R0 is the resistance measured on a sample under no stress; and
$\Delta \varepsilon$ is the strain induced by the applied stress.
g) repeating m times the measure of GF for calculating the average of GF according to the general formula

$$ <GF> = \frac{1}{m} \sum_{j=1}^{m} GFj $$

h) Measuring the standard deviation of GF measurements with the following formula;

$$\sigma GF = \sqrt{\frac{[\sum(GFj) - <GF>]2}{m}}$$

i) Measuring the figure of merit F with the following formula

$$F = \frac{<GF>}{\sigma GF}$$

j) Measuring dF/dϕ.
k) if dF/dϕ=0; the maximum value of F Fmax is obtained and the irradiation is stopped
l) if dF/dϕ > 0; irradiating the composite material during a further time and repeating the steps b) to j) until the requirement of step k) is fulfilled.

**11.** The process according to anyone of claims 8-10, wherein the photocatalytic material is selected from the group of metal oxides consisting of titanium dioxide, zinc oxide, bismuth oxide and vanadium oxide, tungsten oxide, iron oxide, $BiFe_2O_3$ or a mixture thereof or any solid solutions of thereof.

**12.** Use of a multilayered composite material according to any one of claims 1-6 or obtained by a method according to any one of claims 7-11 as a strain gauge.

Figure 1a

Figure 1b

Figure 2

Figure 3

Figure 4

Figure 5

Figure 6

Figure 7

Figure 8

Figure 9

Europäisches
Patentamt

European
Patent Office

Office européen
des brevets

# EUROPEAN SEARCH REPORT

Application Number

EP 13 30 6072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 073 497 A (JIANG TONGBI [US] ET AL) 13 June 2000 (2000-06-13) <br> * abstract * <br> * figures 1-4 * <br> * column 1, line 14 - line 32 * <br> * column 5, line 18 - line 52 * | 1-12 | INV. <br> G01L1/18 <br> G01B7/16 <br> H01L31/0384 |
| A | SONG C ET AL: "Evaluation and design optimization of piezoresistive gauge factor of thick-film resistors", PROCEEDINGS OF SOUTHEASTCON. WILLIAMSBURG, APRIL 7 - 10, 1991; [PROCEEDINGS OF THE SOUTHEAST CONFERENCE], NEW YORK, IEEE, US, vol. -, 7 April 1991 (1991-04-07), pages 1106-1109, XP010045078, DOI: 10.1109/SECON.1991.147935 ISBN: 978-0-7803-0033-0 * the whole document * | 1-12 | |
| A | ZHOU ET AL: "Percolation transition and hydrostatic piezoresistance for carbon black filled poly(methylvinylsilioxane) vulcanizates", CARBON, ELSEVIER, OXFORD, GB, vol. 46, no. 4, 2 February 2008 (2008-02-02), pages 679-691, XP022542578, ISSN: 0008-6223, DOI: 10.1016/J.CARBON.2008.01.028 * the whole document * | 1-12 | TECHNICAL FIELDS SEARCHED (IPC) <br><br> G01L <br> G01B <br> H01L |

The present search report has been drawn up for all claims

| Place of search | Date of completion of the search | Examiner |
|---|---|---|
| The Hague | 4 December 2013 | Daman, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.** EP 13 30 6072

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2013

| Patent document cited in search report | | Publication date | Patent family member(s) | | Publication date |
|---|---|---|---|---|---|
| US 6073497 | A | 13-06-2000 | US | 6073497 A | 13-06-2000 |
| | | | US | 6363796 B1 | 02-04-2002 |
| | | | US | 6520030 B1 | 18-02-2003 |
| | | | US | 6539815 B1 | 01-04-2003 |
| | | | US | 6561044 B1 | 13-05-2003 |
| | | | US | 2003115970 A1 | 26-06-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1054532

**Non-patent literature cited in the description**

- **KIRKPATRICK, S.** *Rev. Mod. Phys.,* 1973, vol. 45, 574
- **ZHOU et al.** *Carbon,* 2008, vol. 46, 679
- **STANKOVICH et al.** *Nature,* 2006, vol. 442, 282
- **ROWE, A.C.H. ; DONOSO-BARRERA, A.; ; RENNER, CH. ; ARSCOTT,S.** *Phys. Rev. Lett.,* 2008, vol. 100, 145501
- **HE, R. ; YANG, P.** *Nat. Nanotechnol.,* 2006, vol. 1, 42